# EUROPÄISCHE PATENTSCHRIFT

(11) **EP 2 099 865 B1**
(45) Veröffentlichungstag und Bekanntmachung des Hinweises auf die Patenterteilung: **22.05.2013**
(21) Anmeldenummer: 07822346.8
(22) Anmeldetag: 08.11.2007
(51) Int. Cl.: C08L 71/00, C08G 65/00, C08G 18/00

(54) **VERFAHREN ZUR HERSTELLUNG VON POLYOLDISPERSIONEN**
PROCESS FOR PRODUCING POLYOL DISPERSIONS
PROCÉDÉ DE PRODUCTION DE DISPERSIONS DE POLYOL

(30) Priorität: 09.11.2006 EP 06123735
(43) Veröffentlichungstag der Anmeldung: 16.09.2009
(73) Patentinhaber: BASF SE, 67056 Ludwigshafen (DE)
(72) Erfinder: SCHNORPFEIL, Christoph, 01127 Dresden (DE)
(86) Internationale Anmeldenummer: PCT/EP2007/062042
(87) Internationale Veröffentlichungsnummer: WO 2008/055952

(56) Entgegenhaltungen:
- EP-A- 1 270 619
- EP-A- 1 316 569
- DE-C1- 4 134 967
- DATABASE EPODOC EUROPEAN PATENT OFFICE, THE HAGUE, NL; 1. März 1994 (1994-03-01), XP002469569 gefunden im EPODOC & JP 06 056943 A (SANYO CHEMICAL IND LTD [JP]) 1. März 1994 (1994-03-01)
- DATABASE WPI Week 199346 Derwent Publications Ltd., London, GB; AN 1993-365476 XP002469570 & JP 05 271639 A (SUNSTAR GIKEN KK) 19. Oktober 1993 (1993-10-19)
- DATABASE WPI Week 199315 Derwent Publications Ltd., London, GB; AN 1993-121436 XP002469571 & JP 05 059134 A (SANYO CHEMICAL IND LTD [JP]) 9. März 1993 (1993-03-09)
- JOHN WILEY & SONS: "Encyclopedia of Polymer Science and Engineering" 1985, WILEY -INTERSCIENCE , NEW YORK 3 , XP002469705 Seite 760 - Seite 765 Seite 771 - Seite 772; Abbildung 13

## Beschreibung

Die vorliegende Erfindung betrifft Polyoldispersionen mindestens enthaltend mindestens ein Polyol und mindestens ein Polymerpartikelgemisch, umfassend mindestens ein thermoplastisches Polymer (P) und mindestens ein Blockcopolymer (B), wobei das Blockcopolymer (B) mindestens einen zu dem thermoplastischen Polymer (P) kompatiblen Block und mindestens einen zu dem Polyol kompatiblen Block aufweist, ein Verfahren zur Herstellung derartiger Polyoldispersionen, deren Verwendung zur Herstellung von Polyurethanen sowie eine Verfahren zur Herstellung eines Polyurethans.

Polyoldispersionen werden häufig in Polyurethanrezepturen eingesetzt, um die mechanischen Eigenschaften, insbesondere von Polyurethanschäumen zu verbessern.

Aus dem Stand der Technik sind so genannte Graft-Polyole bekannt, die durch radikalische Copolymerisation von beispielsweise Acrylnitril und Styrol in klassischen Polyetherolen als Matrix hergestellt werden. Diese Polymerisation findet unter Anwesenheit von so genannten Makromeren statt, die aus einer dispersionstabilisierenden Polyetherkette und einer an der Copolymerisation beteiligten Olefingruppe bestehen. Die so hergestellte Dispersion besteht aus Partikeln mit einem typischen Durchmesser von 1 Micrometer, mit einem Kern aus Polyolefin und einer Polyetherschale, die kompatibel zum Matrixpolyol ist, und ein Agglomerieren der Partikel verhindert.

Graftpolyole mit kleinen Teilchen und monomodaler Teilchengrössenverteilung lassen sich beispielsweise durch Semi Batch Reaktionen herstellen, wie sie in einer Reihe von Patenten beschrieben sind.

EP 0 221 412 A2 offenbart Graftpolymer Dispersionen in Polyoxyalkylen-PolyetherPolyolen zur Herstellung von Polyurethan-Schäumen. Die Graftpolymere werden durch radikalische Polymerisation hergestellt. US 4,568,705 und US 4,522,976 offenbaren niedrigviskose stabile Graftpolymer-Dispersionen, die ebenfalls durch radikalische Polymerisation im Polyol selbst hergestellt werden. Der Einsatz der Graftpolymere zur Herstellung von Polyurethanen wird ebenfalls offenbart.

Aus WO 01/27185 ist ein Verfahren zur Herstellung von Polyether-Polyester-Blockcopolymeren bekannt, bei dem Polyesteralkohole unter Verwendung von Multimetallcyanidkatalysatoren mit Alkylenoxiden umgesetzt werden. Deren Verwendung für die Herstellung von Polyurethanen wird ebenfalls offenbart.

Auch WO 031076488 betrifft ein Verfahren zur Herstellung von Polyetheralkoholen unter Verwendung mindestens eines Doppelmetallcyanidkatalysators. Weiter werden Verfahren zur Herstellung von Polyurethanen unter Verwendung der dort offenbarten Polyetheralkohole beschrieben.

Nachteilig an den bekannten Graftpolyolen bzw. Graftpolyol-Dispersionen ist, dass zu deren Herstellung zunächst eine aufwändige Synthese von Makromeren nötig ist, die dann in die Polymerisation eingesetzt werden. Auch die Polymerisation selbst erfordert einen hohen sicherheitstechnischen Aufwand. Die Notwendigkeit, nach der Reaktion nicht umgesetztes Restmonomer zu entfernen, ist dabei ebenfalls als nachteilig zu nennen.

Ausgehend von diesem Stand der Technik lag eine Aufgabe der vorliegenden Erfindung darin, Polyoldispersionen bereitzustellen, die einfach und kostengünstig hergestellt werden können.

Eine weitere der Erfindung zugrunde liegende Aufgabe lag darin, Polyoldispersionen bereitzustellen, deren Eigenschaften leicht angepasst werden können.

Erfindungsgemäß wird diese Aufgabe gelöst durch eine Polyoldispersion mindestens enthaltend
(i) mindestens ein Polyol ausgewählt aus der Gruppe bestehend aus Polyetherolen und Polyesterolen,
(ii) mindestens ein Polymerpartikelgemisch umfassend mindestens ein thermoplastisches Polymer (P) ausgewählt aus Polyvinylchlorid, Polyester, Polyamiden und Copolymeren der genannten Polymere und mindestens ein Blockcopolymer (B) ausgewählt aus der Gruppe bestehend aus Polyester-Polyether-Blockcopolymeren, Polyamid-Polyether-Blockcopolymeren, Polystyrol-Polyether-Blockcopolymeren oder Polyethylen-Polyether-Blockcopolymeren,
wobei das Blockcopolymer (B) mindestens einen zu dem thermoplastischen Polymer (P) kompatiblen Block und mindestens einen zu dem Polyol kompatiblen Block aufweist, wobei das mindestens eine Blockcopolymer (B) in einer Menge von 0,1 bis 10 Gew.-%, bezogen auf das Gesamtgewicht des eingesetzten thermoplastischen Polymers (P), in dem Polymerpartikelgemisch enthalten ist, und wobei alle Polymerpartikel des jeweiligen Polymerpartikelgemisches dasselbe thermoplastische Polymer (P) und dasselbe Blockcopolymer (B) enthalten.

Im Rahmen der vorliegenden Erfindung wird unter einem Polyol ein Polyalkohol verstanden, wobei es sich im Rahmen der vorliegenden Anmeldung auch um ein Polyolgemisch mit einer Molekulargewichtsverteilung handeln kann.

Unter Polymeren bzw. Blockcopolymeren werden im Rahmen der vorliegenden Erfindung polymere Verbindungen verstanden, die nach dem Fachmann bekannten Verfahren für Polymere charakterisiert werden können und üblicherweise eine Molekulargewichtsverteilung aufweisen. Auch die Struktur der einzeinen Molekül kann im Rahmen der bei Polymeren üblichen Verteilung voneinander abweichen.

Im Rahmen der vorliegenden Erfindung wird unter einem Polymerpartikelgemisch ein Gemisch von Polymerpartikeln verstanden, wobei alle Polymerpartikel des jeweiligen Polymerpartikegemischs dasselbe thermoplastische Polymer (P) und dasselbe Blockcopolymer (B) enthalten, aber beispielsweise das Verhältnis des thermoplastischen Polymers (P) und des Blockcopolymers (B) in den einzelnen Polymerpartikeln oder der Teilchendurchmesser der einzelnen Polymerpartikel voneinander abweicht.

Dabei weisen erfindungsgemäß die Polymerpartikel vorzugsweise eine derartige Struktur auf, dass das Blockcopolymer (B) jeweils an der Grenzfläche der Polymerpartikel angeordnet ist. Das Blockcopolymer (B) wirkt demgemäß im Rahmen der vorliegenden Erfindung in den erfindungsgemäßen Polyoldispersionen als grenzflächenaktive Substanz. Das thermoplastische Polymer (P) und das Blockcopolymer (B) können in den Polymerpartikeln beispielsweise in cokristallisierter Form vorliegen.

Die erfindungsgemäßen Polyoldispersionen können auf einfache Weise hergestellt werden. Dabei ist es insbesondere nicht nötig, dass eine Polymerisation im Polyol durchgeführt, bei der eine Abtrennung von Monomer erforderlich werden würde. Dadurch besteht auch eine breitere Variationsmöglichkeit, Polyol und thermoplastisches Polymer (P) zu kombinieren, d.h. es besteht keine Einschränkung auf bestimmte Polymere, die im entsprechenden Polyol durch Polymerisation hergestellt werden können. Erfindungsgemäß kann es sich bei dem thermoplastischen Polymer (P) insbesondere auch um einen Massenkunststoff oder ein Recycling-Produkt handeln.

Erfindungsgemäß geeignet als Polyol sind Verbindungen mit einer Hydroxylgruppen-Funktionalität von 2 bis 8, vorzugsweise 2 bis 6, und einem mittleren Molekulargewicht von 300 bis 8000 g/mol, vorzugsweise von 300 bis 5000 g/mol. Die Hydroxylzahl der Polyhydroxylverbindungen beträgt dabei in aller Regel 20 bis 160 und vorzugsweise 28 bis 70.

Die Hydroxyzahl kann beispielsweise durch quantitativen Umsatz der Hydroxygruppen mit Essigsäureanhydrid und Titration der gebildeten Essigsäure mittels KOH bestimmt werden.

Das mittlere Molekulargewicht kann beispielsweise mittels Gelpermeationschromatographie (GPC) bestimmt werden. Geeignete Verfahren sind dem Fachmann grundsätzlich bekannt. Als Standards für die GPC-Messungen können beispielsweise Polystyrol oder insbesondere für die Messung von Estern Polymethylmethacrylat eingesetzt werden.

Zur Charakterisierung der Polyole sind auch die Viskosität und die lodzahl geeignet.

Dabei liegt die Viskosität beispielsweise im Bereich von 10 bis 100000 mPas, insbesondere im Bereich von 25 bis 50000 mPas, bevorzugt im Bereich von 30 bis 30000 mPas, besonders bevorzugt 40 bis 10000 mPas, weiter bevorzugt im Bereich von 50 bis 5000 mPas.

Die lodzahl der Polyole liegt im Rahmen der vorliegenden Erfindung beispielsweise bei <10 g lod/100 g Polymer, insbesondere bei < 5 g lod/100 g Polymer, bevorzugt bei <2,5 g lod/100 g Polymer, besonders bevorzugt bei < 2,0 g lod/100 g Polymer.

Als Polyol werden Polyetherole oder Polyesterole eingesetzt.

Erfindungsgemäß geeignete Polyole können beispielsweise durch Alkoxydation mit Propylenoxid und Ethylenoxid unter Verwendung von Startmolekülen mit Hydroxylgruppen hergestellt werden. Geeignete Verbindungen sind beispielsweise in WO 03/076488 beschrieben.

Daher betrifft die vorliegende Erfindung gemäß einer weiteren Ausführungsform auch eine wie zuvor beschriebene Polyoldispersion, wobei das mindestens eine Polyol ausgewählt ist aus der Gruppe bestehend aus Polyetherolen und Polyesterolen.

Geeignet sind im Rahmen der erfindungsgemäßen Polyoldispersion als thermoplastisches Polymer (P) Polyvinylchlorid, Polyester, wie beispielsweise Polyethylenterephthalat, Polyamide, wie beispielsweise Nylon.

Insbesondere bevorzugt sind Polyester und Polyamide.

Erfindungsgemäß geeignete thermoplastische Polymere (P) weisen üblicherweise in mitteleres Molekulargewicht von 50000 bis 5000000 g/mol auf, beispielsweise 100000 bis 1000000. Dabei werden die Molekulargewichte im Rahmen der vorliegenden Erfindung üblicherweise mittels GPC bestimmt, wobei in der Regel Polystyrolstandards benutzt werden.

Erfindungsgemäß geeignete thermoplastische Polymere (P) weisen üblicherweise eine Glasübergangstemperatur (Tg) auf, die über der Einsatztemperatur liegt. Erfindungsgemäß geeignete thermoplastische Polymere (P) weisen üblicherweise eine Glasübergangstemperatur von größer 25°C auf, insbesondere von größer 60°C, besonders bevorzugt von größer 80°C. Die Glasübergangstemperatur wird üblicherweise mittels DSC bestimmt.

Erfindungsgemäß geeignete thermoplastische Polymere (P) können nach allen dem Fachmann bekannten üblichen Polymerisationsverfahren hergestellt werden. Geeignet sind beispielsweise radikalische oder anionische Polymerisationsverfahren.

Erfindungsgemäß ist es auch möglich, dass als thermoplastisches Polymer (P) Copolymere der oben genannten Polymere eingesetzt werden.

Daher betrifft die vorliegende Erfindung gemäß einer weiteren Ausführungsform auch eine wie zuvor beschriebene Polyoldispersion, wobei das mindestens eine thermoplastische Polymer (P) Polyethylentherephthalat ist.

Erfindungsgemäß bevorzugt ist es, als thermoplastisches Polymer (P) Recyclingmaterialien einzusetzen, d.h. Polymere, die aus einem Recycling-Prozess stammen. Ein derartiges Recycling-Polymer kann beispielsweise Polyethylenterephthalat sein.

Daher betrifft die vorliegende Erfindung gemäß einer weiteren Ausführungsform auch eine wie zuvor beschriebene Polyoldispersion, wobei das mindestens eine thermoplastische Polymer (P) recyceltes Polyethylenterephthalat ist.

Der Vorteil besteht hier vor allem im niedrigen Preis des Recyclingkunststoffs, der auf diese Art in einer hochwertigen Anwendung eingesetzt werden kann.

Als Blockcopolymer (B) wird erfindungsgemäß ein Blockcopolymer eingesetzt, das mindestens einen zu dem thermoplastischen Polymer (P) kompatiblen Block und mindestens einen zu dem Polyol kompatiblen Block aufweist.

Erfindungsgemäß kann das Blockcopolymer auch weitere Blöcke enthalten. Die Länge der einzelnen Blöcke kann dabei unterschiedlich sein.

Im Rahmen der vorliegenden Erfindung weist das Blockcopolymer (B) vorzugsweise nicht eine über eine Imidbindung verknüpfte Struktur auf. Bevorzugt handelt es sich bei dem Blockcopolymer (B) nicht um Reaktionsprodukte von funktionalisierten Maleinsäureanhydriden und Monoamin-Polyolen oder Reaktionsprodukte von Ethylen-Acrylsäure-Copolymeren und Monoamin-Polyolen, insbesondere Reaktionsprodukte von funktionalisierten Maleinsäureanhydriden und Monoamin-Polyolen oder Reaktionsprodukte von Ethylen-Acrylsäure-Copolymerem und Monoamin-Polyolen mit Imid-Bindung.

Üblicherweise liegt die Länge der einzelnen Blöcke bei 5 bis 60 Wiederholungseinheiten, beispielsweise 10 bis 40 Wiederholungseinheiten, bevorzugt 15 bis 20 Wiederholungseinheiten.

Erfindungsgemäß geeignet sind als Blockcopolymer (B) beispielsweise Polyester-Polyether-Blockcopolymere, Polyamid-Polyether-Blockcopolymere, Polystyrol-Polyether-Blockcopolymere oder Polyethylen-Polyether-Blockcopolymere. Dabei können erfindungsgemäß Diblock- oder Triblock-Copolymere eingesetzt werden.

Erfindungsgemäß geeignet sind als Blockcopolymer (B) beispielsweise Polyester-Polyether-Blockcopolymere, Polyamid-Polyether-Blockcopolymere, Polystyrol-Polyether-Blockcopolymere oder Polyethylen-Polyether-Blockcopolymere.

Daher betrifft die vorliegende Erfindung gemäß einer weiteren Ausführungsform auch eine wie zuvor beschriebene Polyoldispersion, wobei das mindestens eine Blockcopolymer (B) ausgewählt ist aus der Gruppe bestehend aus Polyester-Polyether-Blockcopolymeren, Polystyrol-Polyether-Blockcopolymeren oder Polyethylen-Polyether-Blockcopolymeren.

Polyether-Polyester-Blockcopolymere oder Polyether-Polyamid-Blockcopolymere können beispielsweise durch Alkoxidation von kurzkettigen Polyestern oder Polyamiden mittels Doppelmetallcyanid-Katalysator hergestellt werden.

Als Alkylenoxid können beispielsweise Ethylenoxid, Propylenoxid, Butylenoxid, 1,2-Isobutylenoxid, sowie deren beliebige Mischungen untereinander, eingesetzt werden.

Vorzugsweise eingesetzt werden Ethylenoxid, Propylenoxid sowie Mischungen daraus.

Die Alkylenoxide können einzeln oder bei Verwendung von zwei oder mehr verschiedenen Alkylenoxiden in jedem beliebigen Mischungsverhältnis eingesetzt werden. Darüber hinaus kann das Mischungsverhältnis der Alkylenoxide sowohl diskontinuierlich als auch kontinuierlich während der Synthese variiert werden.

Die notwendigen kurzkettigen Polyester mit Hydroxyendgruppen sind in großer Zahl kommerziell verfügbar und werden als so genannte Polyesterole ebenfalls in Polyurethansystemen eingesetzt.

Das Blockcopolymer (B) kann nach allen üblichen, dem Fachmann bekannten Verfahren hergestellt werden. Geeignete Verfahren sind beispielsweise in "Anionic synthesis of well-defined, poly[(styrene)-block-(propylene oxide) block copolymers", R.P.Quirk, G.M. Lizarraga; Macrom. Chem. a. Phys., 2001, 1395-1404 beschrieben.

Der Aufbau von Polyester-Polyether-Blockcopolymeren wird beispielsweise in WO 01/27185 oder WO 03/76488 beschrieben, auf deren diesbezüglichen Inhalt Bezug genommen wird.

Polyester-Polyether-Blockcopolymere können beispielsweise auch über eine Kondensationsreaktion von längerkettigen Polyethylenglykolen zusammen mit difunktionellen Säuren wie beispielsweise Terephthalsäure oder Adipinsäure und anderen Diolen wie beispielsweise Monoethylenglycol, Diethylenglykol oder 1,4-Butandiol hergestellt werden.

Eine Möglichkeit zur Synthese von Polystyrol-Polyether-Blockcopolymeren ist beispielsweise die lebende anionische Polymerisation von Styrol und Alkylenoxiden. Als Alkylenoxide können insbesondere die oben genannten verwendet werden, besonders bevorzugt Ethylenoxid oder Propylenoxid sowie Mischungen daraus.

Erfindungsgemäß geeignete Blockcopolymere weisen vorzugsweise ein Molekulargewicht im Bereich von 3000 bis 30000 g/mol, insbesondere von 6000 bis 15000 g/mol auf. Üblicherweise werden die Molekulargewichte mittels GPC bestimmt.

Der Anteil des Blockcopolymers (B) beträgt 0,1 bis 10 Gew.-%, vorzugsweise 0,2 bis 5 Gew.-%, insbesondere 0,5 bis 3 Gew.-%, bezogen auf das Gesamtgewicht des eingesetzten thermoplastischen Polymers (P).

Die benötigte Menge des Blockcopolymers ist abhängig von dem gewünschten mittleren Teilchendurchmesser des Polymerpartikelgemisches und vom Molekulargewicht des eingesetzten Blockcopolymers (B). Je größer der gewünschte Teilchendurchmesser ist, desto weniger Blockcopolymer wird erfindungsgemäß eingesetzt.

Gemäß einer weiteren bevorzugten Ausführungsform betrifft die vorliegende Erfindung eine Polyoldispersion, mindestens enthaltend
(i) mindestens ein Polyetherol als Polyol
(ii) mindestens ein Polymerpartikelgemisch umfassend mindestens Polyethylentherephthalat als thermoplastisches Polymer (P) und mindestens ein Polyester-Polyether-Blockcopolymer als Blockcopolymer (B).

Gemäß einer weiteren bevorzugten Ausführungsform betrifft die vorliegende Erfindung eine Polyoldispersion, mindestens enthaltend
(i) mindestens ein Polyesterol als Polyol
(ii) mindestens ein Polymerpartikelgemisch umfassend mindestens Polyethylentherephthalat als thermoplastisches Polymer (P) und mindestens ein Polyester-Polyether-Blockcopolymer als Blockcopolymer (B).

Erfindungsgemäß weist das in der Polyoldispersion enthaltene Polymerpartikelgemisch einen mittleren Teilchendurchmesser von 0,01 bis 5,0 Micrometer auf. Vorzugsweise liegt der mittlere . Teilchendurchmesser zwischen 0,05 und 4,0 Micrometer, insbesondere zwischen 0,1 und 3,0 Micrometer, bevorzugt zwischen 0,5 und 2,0 Micrometer, besonders bevorzugt zwischen 0,75 und 1,0 Micrometer.

Daher betrifft die vorliegende Erfindung gemäß einer weiteren Ausführungsform auch eine wie zuvor beschriebene Polyoldispersion, wobei das in der Polyoldispersion enthaltene Polymerpartikelgemisch einen mittleren Teilchendurchmesser im Bereich von 0,01 bis 5,0 Micrometer aufweist.

Der Gesamtfeststoffgehalt der erfindungsgemäßen Polyoldispersionen kann in weiten Bereichen variieren. Die erfindungsgemäßen Polyoldispersionen weisen beispielsweise einen Gesamtfeststoffgehalt von 5 bis 65 Gew.-%, vorteilhafterweise von 10 bis 50 Gew.-%, auf.

Die Teilchendurchmesser und deren Verteilung können mittels dynamischer Lichtstreuung und Frauenhofer-Beugung bestimmt werden.

Im Rahmen der vorliegenden Erfindung ist der Feststoffgehalt der Polyoldispersionen als das prozentuale Verhältnis des Polymerpartikelgemisches zu dem eingesetzten Polyol zu verstehen. Der Feststoffgehalt kann beispielsweise gravimetrisch aus dem prozentualen Verhältnis der Feststoffmasse zur Gesamtmasse der Polyoldispersion bestimmt werden.

Daher betrifft die vorliegende Erfindung gemäß einer weiteren Ausführungsform auch eine wie zuvor beschriebene Polyoldispersion, wobei die Polyoldispersion einen Feststoffgehalt von 5 bis 65 Gew.% aufweist.

Die erfindungsgemäßen Polyoldispersionen können ein oder mehrere Polyole enthalten. Die Polyole können sich beispielsweise in der OH-Zahl, der chemischen Struktur, der Funktionalität oder dem primären OH-Gruppengehalt unterscheiden. Ebenso ist es im Rahmen der vorliegende Erfindung möglich, dass die erfindungsgemäßen Polyolsispersionen ein oder mehrere verschiedene Polymerpartikelgemische enthalten.

Erfindungsgemäß ist es auch möglich, dass die Polyoldispersion zusätzlich ein Graftpolyol enthält. Dies kann beispielsweise einer erfindungsgemäßen Polyoldispersion zugegeben werden.

Die vorliegenden Erfindung betrifft auch ein Verfahren zur Herstellung einer Polyoldispersion, umfassend die Schritte
(a) Erwärmen einer Zusammensetzung (I) enthaltend mindestens ein thermoplastisches Polymer (P) ausgewählt aus Polystyrol, substituierten Polystyrolen, Polyacrylaten, Polymethacrylaten, Polyolefinen, Polyvinylchlorid, Polyacrylnitril, Polyester, Polyamiden und Copolymeren der genannten Polymere, mindestens ein Polyol ausgewählt aus der Gruppe bestehend aus Polyetherolen und Polyesterolen, und mindestens ein Blockcopolymer (B) ausgewählt aus der Gruppe bestehend aus Polyester-Polyether-Blockcopolymeren, Polyamid-Polyether-Blockcopolymeren, Polystyrol-Polyether-Blockcopolymeren oder Polyethylen-Polyether-Blockcopolymeren mit mindestens einem zu dem thermoplastischen Polymer (P) kompatiblen Block und mindestens einem zu dem Polyol kompatiblen Block unter Erhalt einer Zusammensetzung (II),
(b) Abkühlen der Zusammensetzung (II),
dadurch gekennzeichnet, dass das thermoplastische Polymer (P) vor der Zugabe zu dem Polyol gebildet wird und dass die Zusammensetzung (I) in Schritt (a) bis auf eine Temperatur erwärmt wird, bei der das eingesetzte thermoplastische Polymer (P) schmilzt.

Das erfindungsgemäße Verfahren erlaubt die preiswerten Herstellung von Polyoldispersionen auf einfache Weise.

Gemäß Schritt (a) des erfindungsgemäßen Verfahrens wird die Zusammensetzung (I) bis auf eine Temperatur erwärmt, bei der das eingesetzte thermoplastische Polymer (P) schmilzt. Vorzugsweise werden die übrigen eingesetzten Komponenten bei der gewählten Temperatur nicht zersetzt.

Erfindungsgemäß wird beim Erwärmen der Zusammensetzung gemäß Schritt (a) das thermoplastische Polymer (P) aufgeschmolzen. Dabei bildet sich erfindungsgemäß eine Emulsion, wobei das Blockcopolymer (B) vorzugsweise überwiegend an der Grenzfläche von thermoplastischem Polymer (P) und Polyol angeordnet ist. Vorzugsweise ist im Rahmen der vorliegenden Erfindung Zusammensetzung (II) eine Emulsion.

Beim Abkühlen der Zusammensetzung (II) erstarren oder kristallisieren erfindungsgemäß die Polymertröpfchen, wobei sich ein Polymerpartikelgemisch umfassend mindestens ein thermoplastisches Polymer (P) und mindestens ein Blockcopolymer (B) bildet.

Erfindungsgemäß erfolgt in Schritt (a) neben der Erwärmung der Zusammensetzung (I) ein Durchmischen, so dass das thermoplastische Polymer (P) in der Zusammensetzung (II) vorzugsweise in Form von fein verteilten Tropfen vorliegt.

Die erfindungsgemäße Einarbeitung der thermoplastischen Polymere findet bei höheren Temperaturen durch starke Durchmischung, vorzugsweise durch Rühren, unter Zugabe der grenzflächenaktiven Blockcoploymere statt. Dabei bildet sich vorzugsweise zunächst eine Emulsion von geschmolzenen Polymertröpfchen im Polyol. Die Tropfengröße kann durch die eingetragene Rührenergie und die zugesetzte Art und Menge des Blockcopolymers (B) kontrolliert werden.

Durch Abkühlen der Emulsion festigen sich die Polymertropfen, wobei die zu dem thermoplastischen Polymer (P) kompatiblen Bereiche des Blockcopolymers (B) vorzugsweise teilweise mit einkristallisieren und somit fest mit dem Polymerpartikel verbunden sind. Die Polyetherblöcke der Blockcopolymere befinden sich vorzugsweise an der Oberfläche der Polymerpartikel und können eine Stabilisierung der erhaltenen Dispersion bewirken.

Erfindungsgemäß werden Schritt (a) oder Schritt (b) oder Schritt (a) und Schritt (b) des erfindungsgemäßen Verfahrens unter Rühren durchgeführt.

Daher betrifft die vorliegende Erfindung gemäß einer weiteren Ausführungsform auch ein wie zuvor beschriebenes Verfahren zur Herstellung einer Polyoldispersion, wobei Schritt (a) des Verfahrens unter Rühren durchgeführt wird.

Erfindungsgemäß muss dabei die Temperatur bei Schritt (a) über der Schmelztemperatur des thermoplastischen Polymers (P) liegen.

Erfindungsgemäß ist es auch möglich, dass das Erwärmen gemäß Schritt (a) in einem Extruder durchgeführt wird, bevorzugt in einem Zweischneckenextruder.

Für einzelne Anwendungen kann es vorteilhaft sein, wenn die Polymerpartikel eine enge Teilchendurchmesserverteilung aufweisen. Insbesondere kann es vorteilhaft sein, dass die Polyoldispersion keine großen Teilchen enthält, d.h. Teilchen mit einem Durchmesser von größer 10µm, die zu Störungen beim Verarbeiten, wie beispielsweise zum Verstopfen von Filtern, Sieben oder Düsen, führen können. Deshalb wird die gemäß dem erfindungsgemäßen Verfahren erhaltene Polyoldispersion gemäß einer Ausführungsform des erfindungsgemäßen Verfahrens nach dem Abkühlen gemäß Schritt (b) durch eine ein- oder mehrstufige Filtration gereinigt.

Als Polyol sind für das erfindungsgemäße Verfahren Polyetherole und Polyesterole geeignet.

Daher betrifft die vorliegende Erfindung auch ein wie zuvor beschriebenes Verfahren zur Herstellung einer Polyoldispersion, wobei das mindestens eine Polyol ausgewählt ist aus der Gruppe bestehend aus Polyetherolen und Polyesterolen.

Als thermoplastisches Polymer (P) sind für das erfindungsgemäße Verfahren thermoplastische Polymere (P) ausgewählt aus Polystyrol, substituierten Polystyrolen, Polyacrylaten, Polymethacrylaten, Polyolefinen, Polyvinylchlorid, Polyacrylnitril, Polyester, Polyamiden und Copolymeren der genannten Polymere geeignet.

Daher betrifft die vorliegende Erfindung gemäß einer weiteren Ausführungsform auch ein wie zuvor beschriebenes Verfahren zur Herstellung einer Polyoldispersion, wobei das mindestens eine thermoplastisches Polymer (P) ausgewählt ist aus der Gruppe bestehend aus Polystyrol, Polyethylen und Polyethylenterephthalat.

Als Blockcopolymer (B) sind für das erfindungsgemäße Verfahren Blockcopolymere (B) ausgewählt aus der Gruppe bestehend aus Polyester-Polyether-Blockcopolymeren, Polyamid-Polyether-Blockcopolymeren, Polystyrol-Polyether-Blockcopolymeren oder Polyethylen-Polyether-Blockcopolymeren geeignet.

Daher betrifft die vorliegende Erfindung gemäß einer weiteren Ausführungsform auch ein wie zuvor beschriebenes Verfahren zur Herstellung einer Polyoldispersion, wobei das mindestens eine Blockcopolymer (B) ausgewählt ist aus der Gruppe bestehend aus Polyester-Polyether-Blockcopolymeren, Polystyrol-Polyether -Blockcopolymeren und Polyethylen-Polyether-Blockcopolymeren.

Erfindungsgemäß werden Blockcopolymer (B) und thermoplastisches Polymer (P) in Mengen eingesetzt, die dem gewünschten Verhältnis im Polymerpartikelgemisch entsprechen.

Daher betrifft die vorliegende Erfindung gemäß einer weiteren Ausführungsform auch ein wie zuvor beschriebenes Verfahren zur Herstellung einer Polyoldispersion, wobei das mindestens eine Blockcopolymer (B) in einer Menge von 0,1 bis 10 Gew.-%, bezogen auf das Gesamtgewicht des eingesetzten thermoplastischen Polymers (P), eingesetzt wird.

Die erfindungsgemäßen Polyoldispersionen bzw. die nach einem erfindungsgemäßen Verfahren erhältlichen Polyoldispersionen eignen sich insbesondere für die Herstellung von Polyurethanen.

Die vorliegende Erfindung betrifft daher auch die Verwendung einer wie zuvor beschriebene Polyoldispersion oder einer Polyoldispersion erhältlich nach einem wie zuvor beschriebenen Verfahren zur Herstellung von Polyurethanen.

Durch den Einsatz der erfindungsgemäßen Polyoldispersionen bei der Herstellung von Polyurethanen, insbesondere von Polyurethanschaumstoffen, kann das Schäumverhalten, insbesondere das Zellöffnungsverhalten, positiv beeinflusst werden. Aufgrund der dispergierten Phase, also der Feststoffe in der Polyoldispersion, kommt es zur Härteerhöhung der Polyurethanschäume im Vergleich zu Schäumen, die ohne den Zusatz der erfindungsgemäßen Polyoldispersionen hergestellt werden.

Verfahren und Einsatzstoffe für die Herstellung von Polyurethanen sind dem Fachmann grundsätzlich bekannt. Üblicherweise werden mindestens eine PolyolKomponente und mindestens ein Polyisocyanat umgesetzt.

Daher betrifft die vorliegende Erfindung auch ein Verfahren zur Herstellung eines Polyurethans, wobei mindestens eine wie zuvor beschriebene Polyoldispersion oder eine Polyoldispersion erhältlich nach einem wie zuvor beschriebenen Verfahren mit mindestens einem Polyisocyanat umgesetzt wird.

Die Herstellung der Polyurethane erfolgt erfindungsgemäß insbesondere durch Umsetzung von organischen und/oder modifizierten organischen Polyisocyanaten mit den oben beschriebenen erfindungsgemäßen Polyoldispersionen und gegebenenfalls weiteren gegenüber Isocyanaten reaktive Wasserstoffatome aufweisenden Verbindungen in Gegenwart von Katalysatoren, gegebenenfalls Wasser und/ oder anderen Treibmitteln und gegebenenfalls weiteren Hilfs- und Zusatzstoffen.

Erfindungsgemäß kann die erfindungsgemäße Polyoldispersion oder die nach einem erfindungsgemäßen Verfahren erhältliche Polyoldispersion alleine oder zusammen mit mindestens einem weiteren Polyol oder zusammen mit mindestens einem Graftpolyol oder zusammen mit mindestens einem weiteren Polyol und mindestens einem Graftpolyol eingesetzt werden.

Zu den neben den erfindungsgemäßen Polyoldispersionen verwendbaren weiteren Ausgangskomponenten ist im Einzelnen Folgendes auszuführen:

Als Polyisocyanate können erfindungsgemäß grundsätzlich alle dem Fachmann bekannten Polyisocyanate eingesetzt werden, insbesondere aliphatische, cycloaliphatische, araliphatische und vorzugsweise aromatische mehrwertige Isocyanate.

Geeignet sind beispielsweise: Alkylendiisocyanate mit 4 bis 12 Kohlenstoffatomen im Alkylenrest, wie 1,12-Dodecandiisocyanat, 2-Ethyl-tetramethylen-1,4-diisocyanat, 2-Methylpentamethylen-1,5-diisocyanat, Tetramethylen-1,4-diisocyanat und vorzugsweise Hexamethylen-1,6-diisocyanat; cycloaliphatische Diisocyanate, wie Cyclohexan-1,3-und -1,4-diisocyanat sowie beliebige Gemische dieser Isomeren, I-Isocyanato-3,3,5-tri-methyl-5-isocyanatomethylcyclohexan (IPDI), 2,4- und 2,6-Hexahydrotoluylendiisocyanat sowie die entsprechenden Isomerengemische, 4,4'-, 2,2'- und 2, 4'-Dicyclohexylmethandiisocyanat sowie die entsprechenden Isomerengemische, und vorzugsweise aromatische Di- und Polyisocyanate, wie z. B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylenpolyisocyanate, Mischungen aus 4,4'- , 2,4'- und 2,2'-Diphenylmethandiisocyanaten und Polyphenylpolymethylenpolyisocyanaten (Roh-MDI) und Mischungen aus Roh-MDI und Toluylendiisocyanaten.

Die organischen Di- und Polyisocyanate können einzeln oder in Form ihrer Mischungen eingesetzt werden.

Bevorzugt verwendet werden Toluylendiisocyanat, Gemische aus Diphenylmethandiisocyanat-Isomeren, Gemische aus Diphenylmethandiisocyanat und Roh-MDI oder Toluylendiisocyanat mit Diphenylmethandiisocyanat und/oder Roh-MDI. Besonders bevorzugt eingesetzt werden Gemische aus Diphenylmethandiisocyanat-Isomeren mit Anteilen an 2,4'-Diphenylmethandiisocyanat von mindestens 30 Gew.-%.

Häufig werden auch sogenannte modifizierte mehrwertige Isocyanate, d. h. Produkte, die durch chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat-, Uretdion- und/oder Urethangruppen enthaltende Di-und/oder Polyisocyanate. Im Einzelnen kommen beispielsweise in Betracht: Urethangruppen enthaltende organische, vorzugsweise aromatische, Polyisocyanate mit NCO-Gehalten von 43 bis 15 Gew.%, vorzugsweise von 31 bis 21 Gew.-%, bezogen auf das Gesamtgewicht, durch Umsetzung beispielsweise mit niedermolekularen Diolen, Triolen, Dialkylenglykolen, Trialkylenglykolen oder Polyoxyalkylenglykolen mit mittleren Molekulargewichten bis 6000 g/mol, insbesondere mit mittleren Molekulargewichten bis 1500 g/mol, modifiziertes 4,4'-Diphenylmethandiisocyanat, modifizierte 4,4'- und 2,4'-Diphenylmethandiisocyanatmischungen oder modifiziertes Roh-MDI oder 2, 4- bzw. 2,6-Toluylendiisocyanat. Die Di- bzw. Polyoxyalkylenglykole können dabei einzeln oder als Gemische eingesetzt werden, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 35 Gew.-%, vorzugsweise von 21 bis 14 Gew.%, bezogen auf das Gesamtgewicht, hergestellt aus Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Geeignet sind ferner flüssige, Carbodiimidgruppen und/oder Isocyanuratringe enthaltende Polyisocyanate mit NCO-Gehalten von 43 bis 15 Gew.%, vorzugsweise 31 bis 21 Gew.%, bezogen auf das Gesamtgewicht, z. B. auf Basis von 4,4'-, 2,4'-und/oder 2, 2-Diphenylmethandiisocyanat und/oder 2,4- und/oder 2,6-Toluylendiisocyanat.

Die modifizierten Polyisocyanate können erfindungsgemäß auch miteinander oder mit unmodifizierten organischen Polyisocyanaten wie z.B. 2,4'-, 4,4'-Diphenylmethandiisocyanat, Roh-MDI, 2,4- und/oder 2,6-Toluylendiisocyanat gemischt werden.

Besonders geeignet als modifizierte organische Polyisocyanate sind NCOgruppenhaltige Prepolymere, die vorteilhafterweise gebildet werden aus der Reaktion der Isocyanate mit Polyolen sowie gegebenenfalls weiteren Verbindungen mit gegenüber Isocyanaten reaktiven funktionellen Gruppen.

Neben den oben beschriebenen erfindungsgemäßen Polyoldispersionen werden gegebenenfalls weitere gegenüber Isocyanaten reaktive Wasserstoffatome aufweisende Verbindungen zugegeben.

Hierfür kommen beispielsweise Verbindungen mit mindestens zwei reaktiven Wasserstoffatomen in Frage. Dabei werden zweckmässigerweise solche mit einer Funktionalität von 2 bis 8, vorzugsweise 2 bis 3, und einem mittleren Molekulargewicht von 300 bis 8000, vorzugsweise von 300 bis 5000, verwendet. Die Hydroxylzahl der Polyhydroxylverbindungen beträgt dabei in aller Regel 20 bis 160 und vorzugsweise 28 bis 70.

Die erfindungsgemäß verwendtbaren Polyhydroxyverbindungen, beispielsweise Polyetherpolyole, werden nach bekannten Verfahren hergestellt. Beispielsweise können sie durch anionische Polymerisation mit Alkalihydroxiden, wie z. B. Natrium- oder Kalium- hydroxid oder Alkalialkoholaten, wie z. B. Natriummethylat, Natrium- oder Kaliumethylat oder Kaliumisopropylat als Katalysatoren und unter Zusatz mindestens eines Startermoleküls, das 2 bis 8, vorzugsweise 2 bis 3, reaktive Wasserstoffatome aufweist, oder durch kationische Polymerisation mit Lewisssäuren, wie Antimonpentachlorid, Borfluorid-Etherat u. a., oder Bleicherde als Katalysatoren hergestellt werden. Ebenso können Polyhydroxyverbindungen durch Doppelmetallcyanidkatalyse aus einem oder mehreren Alkylenoxiden mit 2 bis 4 Kohlenstoffatomen im Alkylenrest hergestellt werden. Für spezielle Einsatzzwecke können auch monofunktionelle Starter in den Polyetheraufbau eingebunden werden.

Geeignete Alkylenoxide sind beispielsweise Tetrahydrofuran, 1,3-Propylenoxid, 1,2-bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamin, 2,3-, 2,4- und 2,6-Toluylendiamin und 4,4'-, 2,4'- und 2,2'-Diaminodiphenylmethan. Als Startermoleküle kommen ferner in Betracht: Alkanolamine, wie z. B. Ethanolamin, N-Methyl- und N-Ethylethanolamin, Dialkanolamine, wie z. B. Diethanolamin, N-Methyl- und N-Ethyldiethanolamin, Trialkanolamine, wie z. B. Triethanolamin, und Ammoniak. Vorzugsweise verwendet werden mehrwertige, insbesondere zwei- und/oder dreiwertige Alkohole, wie Ethandiol, 1,2- und 2,3-Propandiol, Diethylenglykol, Dipropylenglykol, 1,4-Butandiol, 1,6-Hexandiol, Glycerin, Trimethylolpropan, Pentaerythrit.

Die Polyetherpolyole, vorzugsweise Polyoxypropylen- und Polyoxypropylenpolyoxyethylenpolyole, besitzen eine Funktionalität von vorzugsweise 2 bis 8 und insbesondere 2 bis 3 und mittlere Molekulargewichte von 300 bis 8000 g/mol, vorzugsweise 300 bis 6000 g/mol und insbesondere 1000 bis 5000 g/mol. Geeignete Polyoxytetramethylenglykole weisen beispielsweise ein mittleres Molekulargewicht bis ungefähr 3500 g/mol auf.

Die Polyhydroxyverbindungen, insbesondere Polyetherpolyole, können einzeln oder in Form von Mischungen verwendet werden.

Neben den beschriebenen Polyetherpolyolen können beispielsweise auch Polyetherpolyamine und/oder weitere Polyole, ausgewählt aus der Gruppe der Polyesterpolyole, Polythioetherpolyole, Polyesteramide, hydroxylgruppenhaltigen Polyacetalen und hydroxylgruppenhaltigen aliphatischen Polycarbonaten oder Mischungen aus mindestens zwei der genannten Polyole verwendet werden.

Die Hydroxylzahl der Polyhydroxylverbindungen beträgt dabei in aller Regel 20 bis 80 und vorzugsweise 28 bis 70.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, nach üblichen Verfahren hergestellt werden. Üblicherweise werden die organischen Polycarbonsäuren und/oder -derivate und mehrwertigen Alkohole, vorteilhafterweise im Molverhältnis von 1 zu 1 bis 1 zu 1,8, vorzugsweise von 1 zu 1,05 bis 1 zu 1,2, katalysatorfrei oder vorzugsweise in Gegenwart von Veresterungskatalysatoren, zweckmässigerweise in einer Atmosphäre aus Inertgas, wie z. B. Stickstoff, Kohlenmonoxid, Helium, Argon u. a., in der Schmelze bei Temperaturen von 150 bis 250°C, vorzugsweise 180 bis 220°C, gegebenenfalls unter vermindertem Druck bis zu der gewünschten Säurezahl, die vorteilhafterweise kleiner als 10, vorzugsweise kleiner als 2 ist, polykondensiert.

Als hydroxylgruppenhaltige Polyacetale kommen z. B. die aus Glykolen, wie Diethylenglykol, Triethylenglykol, 4,4'-Dihydroxyethoxydiphenyldimethylmethan, Hexandiol und Formaldehyd herstellbaren Verbindungen in Frage. Auch durch Polymerisation cyclischer Acetale lassen sich geeignete Polyacetale herstellen. Als Hydroxylgruppen aufweisende Polycarbonate kommen solche der an sich bekannten Art in Betracht, die beispielsweise durch Umsetzung von Diolen, wie 1,3-Propandiol, 1,4-Butandiol und/oder 1,6-Hexandiol, Diethylenglykol, Triethylenglykol oder Tetraethylenglykol mit Diarylcarbonaten, z. B. Diphenylcarbonat, oder Phosgen hergestellt werden können. Zu den Polyesteramiden zählen z. B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den oben genannten Polyetherpolyolen nach bekannten Verfahren hergestellt werden. Beispielhaft genannt seien die Cyanoalkylierung von Polyoxyalkylenpolyolen und anschließende Hydrierung des gebildeten Nitrils oder die teilweise oder vollständige Aminierung von Polyoxyalkylenpolyolen mit Aminen oder Ammoniak in Gegenwart von Wasserstoff und Katalysatoren.

Die Polyhydroxyverbindungen können einzeln oder in Form von Mischungen verwendet werden.

Die Polyurethane können erfindungsgemäß ohne oder unter Mitverwendung von Kettenverlängerungs- und/oder Vernetzungsmitteln hergestellt werden.

Als Kettenverlängerungs- und/oder Vernetzungsmittel können Diole und/oder Triole mit Molekulargewichten kleiner als 400 g/mol, vorzugsweise 60 bis 300 g/mol verwendet werden. In Betracht kommen beispielsweise aliphatische, cycloaliphatische und/oder araliphatische Diole mit 2 bis 14, vorzugsweise 4 bis 10 Kohlenstoffatomen, wie z. B. Ethylenglykol, 1,3,-Propandiol, 1,10-Decandiol, o-, m-, p-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4- und 1,3,5-Trihydroxycyclohexan, Triethanolamin, Diethanolamin, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur erfindungsgemäßen Herstellung der Polyurethane Kettenverlängerungsmittel, Vernetzungsmittel oder Mischungen davon Anwendung finden, kommen diese zweckmässigerweise in einer Menge bis zu 10 Gew.%, bezogen auf das Gewicht der Summe der Polyolverbindungen, zum Einsatz.

Als Treibmittel können die aus der Polyurethanchemie allgemein bekannten Fluorchlorkohlenwasserstoffe (FCKW) sowie hoch- und/oder perfluorierte Kohlenwasserstoffe verwendet werden. Erfindungsgemäß können weiterhin insbesondere aliphatische und/oder cycloaliphatische Kohlenwasserstoffe, insbesondere Pentan und Cyclopentan oder Acetale, wie z. B. Methylal und CO₂, als Treibmittel eingesetzt werden. Diese physikalischen Treibmittel werden üblicherweise der Polyolkomponente zugesetzt. Sie können jedoch auch in der Isocyanatkomponente oder als Kombination sowohl der Polyolkomponente als auch der Isocyanatkomponente zugesetzt werden.

Möglich ist auch die Verwendung mehrer Treibmittel zusammen, insbesondere in Form einer Emulsion der Polyolkomponente. Als Emulgatoren, sofern sie Anwendung finden, werden üblicherweise oligomere Acrylate eingesetzt, die als Seitengruppen Polyoxyalkylen- und Fluoralkanreste gebunden enthalten und einen Fluorgehalt von ungefähr 5 bis 30 Gew.% aufweisen. Derartige Produkte sind aus der Kunststoffchemie hinreichend bekannt, und beispielsweise in EP 0 351 614 A offenbart. Die eingesetzte Menge des Treibmittels bzw. der Treibmittelmischung liegt dabei bei 1 bis 25 Gew.%, vorzugsweise 1 bis 15 Gew.%, jeweils bezogen auf das Gesamtgewicht der eingesetzten Komponenten.

Weiterhin ist es möglich und üblich, als Treibmittel der Polyolkomponente Wasser in einer Menge von 0,5 bis 15 Gew.%, vorzugsweise 1 bis 5 Gew.%, bezogen auf das Gesamtgewicht der eingesetzten Komponenten, zuzusetzen. Der Wasserzusatz kann in Kombination mit dem Einsatz der anderen beschriebenen Treibmittel erfolgen.

Vorzugsweise wird im Sinne der Erfindung Wasser als Treibmittel benutzt.

Als Katalysatoren zur Herstellung der Polyurethane werden insbesondere Verbindungen verwendet, die die Reaktion der reaktiven Wasserstoffatome, insbesondere Hydroxylgruppen enthaltender Verbindungen, mit den organischen, gegebenenfalls modifizierten Polyisocyanaten stark beschleunigen. In Betracht kommen organische Metallverbindungen, vorzugsweise organische Zinnverbindungen, wie Zinn-(II)-salze von organischen Carbonsäuren, z. B. Zinn-(II)-acetat, Zinn-(II)-octoat, Zinn-(II)-ethylhexoat und Zinn-(II)-laurat, und die Dialkylzinn-(IV)-salze von organischen Carbonsäuren.

Geeignet sind beispielsweise Dibutylzinndiacetat, Dibutylzinndilaurat, Dibutylzinnmaleat und Dioctylzinndiacetat. Die organischen Metallverbindungen werden allein oder vorzugsweise in Kombination mit stark basischen Aminen eingesetzt. Genannt seien beispielsweise Amidin, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethylbutandiamin, N,N,N',N'-Tetramethylhexan-1,6-diamin, Pentamethyldiethylentriamin, Tetramethyldiaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diazabicyclo-(2,2,2)-octan, und Aminoalkanolverbindungen, wie Triethanolamin, Triisopropanolamin, N-Methyl- und N-Ethyldiethanolamin und Dimethylethanolamin.

Als Katalysatoren kommen ferner in Betracht: Tris-(dialkylaminoalkyl)-s-hexahydrotriazine, insbesondere Tris-(N,N-dimethylamino-propyl)-s-hexahydrotriazin, Tetraalkylammoniumhydroxide, wie Tetramethylammoniumhydroxid, Alkalihydroxid, wie Natriumhydroxid, und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.

Vorzugsweise verwendet werden 0,001 bis 5 Gew.%, insbesondere 0,05 bis 2 Gew.-% Katalysator bzw. Katalysatorkombination, bezogen auf das Gewicht der Aufbaukomponenten.

Der Reaktionsmischung zur erfindungsgemäßen Herstellung der Polyurethane können gegebenenfalls noch weitere Hilfsmittel und/oder Zusatzstoffe zugesetzt, werden. Genannt seien beispielsweise Flammschutzmittel, Stabilisatoren, Füllstoffe, Farbstoffe, Pigmente und Hydrolyseschutzmittel sowie fungistatische und bakteriostatisch wirkende Substanzen.

Geeignete Flammschutzmittel sind beispielsweise Trikresylphosphat, Tris-(2-chlorethyl)phosphat, Tris-(2-chlorpropyl)-phosphat, Tetrakis-(2-chlorethyl)-ethylendiphosphat, Dimethylmethanphosphonat, Diethanolaminomethylphosphonsäurediethylester sowie handelsübliche halogenhaltige und halogenfreie Flammschutzmittel. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z. B. Melamin, oder Mischungen aus mindestens zwei Flammschutzmitteln, wie z. B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanatpolyadditionsprodukte verwendet werden. Besonders wirksam erweisen sich dabei Zusätze an Melamin. Im Allgemeinen hat es sich als zweckmässig erwiesen, 5 bis 50 Gew.-%, vorzugsweise 5 bis 30 Gew.%, der genannten Flammschutzmittel für jeweils 100 Gew.-% der übrigen eingesetzten Komponenten zu verwenden.

Als Stabilisatoren werden insbesondere oberflächenaktive Substanzen, d. h. Verbindungen eingesetzt, welche zur Unterstützung der Homogenisierung der Ausgangsstoffe dienen und gegebenenfalls auch geeignet sind, die Zellstruktur des Polyurethans zu regulieren. Genannt seien beispielsweise Emulgatoren, wie die Natriumsalze der Rizinusölsulfate oder Fettsäuren sowie Salze von Fettsäuren mit Aminen, z. B. ölsaures Diethylamin, stearinsaures Diethanolamin, rizinolsaures Diethanolamin, Salze von Sulfonsäuren, z. B. Alkali- oder Ammoniumsalze von Dodecylbenzol- oder Dinaphthylmethandisulfonsäure und Ricinolsäure; Schaumstabilisatoren, wie Siloxanoxalkylenmischpolymerisate und andere Organopolysiloxane, oxethylierte Alkylphenole, oxethylierte Fettalkohole, Paraffinöle, Rizinusöl- bzw. Rizinolsäureester, Türkischrotöl und Erdnussöl, und Zellregler, wie Paraffine, Fettalkohole und Dimethylpolysiloxane. Als Stabilsatoren kommen vorwiegend Organopolysiloxane zur Anwendung, die wasserlöslich sind. Dabei handelt es sich um Polydimethylsiloxanreste, an denen eine Polyetherkette aus Ethylenoxid und Propylenoxid angepfropft ist. Die oberflächenaktiven Substanzen werden üblicherweise in Mengen von 0,01 bis 5 Gew.%, bezogen auf 100 Gew.% der übrigen eingesetzten Komponenten eingesetzt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im Einzelnen seien beispielhaft genannt: anorganische Füllstoffe, wie silikatische Mineralien, beispielsweise Schichtsilikate, wie Antigorit, Serpentin, Hornblenden, Ampibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u. a.. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Kohle, Kollophonium, Cyclopentadienylharze und Pfropfpolymerisate sowie Cellulosefasem, Polyamid-, Polyacrylnitril-, Polyurethan-, Polyesterfasern auf der Grundlage von aromatischen und/oder aliphatischen Dicarbonsäureestern und insbesondere Kohlenstofffasern. Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der übrigen eingesetzten Komponenten, eingesetzt, wobei jedoch der Gehalt an Matten, Vliesen und Geweben aus natürlichen und synthetischen Fasern Werte bis 80 Gew.-% erreichen kann.

Nähere Angaben über die oben genannten anderen üblichen Hilfs- und Zusatzstoffe sind der Fachliteratur, beispielsweise der Monographie von J. H. Saunders und K. C. Frisch "High Polymers" Band XVI, "Polyurethanes", Teil 1 und 2, Verlag Interscience Publishers 1962 bzw. 1964, oder dem oben zitierten Kunststoffhandbuch, "Polyurethane", Band VII, Hanser-Verlag München, Wien, 1. bis 3. Auflage, zu entnehmen.

Zur Herstellung der erfindungsgemäßen Polyurethane werden die organischen und/oder modifizierten organischen Polyisocyanate, die Polyoldispersion und gegebenenfalls die weiteren gegenüber Isocyanaten reaktive Wasserstoffatome aufweisenden Verbindungen sowie weiteren Bestandteilen in solchen Mengen zur Umsetzung gebracht, dass das Äquivalenzverhältnis von NCO-Gruppen der Polyisocyanate zur Summe der reaktiven Wasserstoffatome der übrigen Komponenten weniger als 0,95 : 1, vorzugsweise weniger als 0,70 : 1, beträgt.

Polyurethanschaumstoffe können beispielsweise nach dem one-shot-Verfahren, beispielsweise mit Hilfe der Hochdruck- oder Niederdruck-Technik in offenen oder geschlossenen Formwerkzeugen, beispielsweise metallischen Formwerkzeugen hergestellt werden. Üblich ist auch das kontinuierliche Auftragen des Reaktionsgemisches auf geeignete Bandstrassen oder der diskontinuierliche Eintrag in offene Blockformen zur Erzeugung von Schaumblöcken.

Formschaumstoffen können auch nach dem Zweikomponentenverfahren hergestellt werden.

Blockschaumstoffe werden üblicherweise nach dem Mehrkomponenten-Verfahren hergestellt. Die Reaktionsprodukte werden bei Blockschäumen in einem Mischkopf zusammengeführt und direkt oder über einen Trog auf die offene Schäumbahn gegeben.

Die Temperaturen liegen dabei vorzugsweise zwischen 20 und 25 °C.

Die Ausgangskomponenten werden bei einer Temperatur von 15 bis 90 °C, vorzugsweise von 20 bis 60 °C und insbesondere von 20 bis 35 °C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann mechanisch mittels eines Rührers, mittels einer Rührschnecke oder durch eine Hochdruckvermischung in einer Düse durchgeführt werden. Die Formwerkzeugtemperatur beträgt zweckmässigerweise 20 bis 110 °C, vorzugsweise 30 bis 60 °C und insbesondere 35 bis 55 °C.

Die Polyurethanschaumstoffe weisen vorteilhafterweise eine Dichte von 10 bis 150 kg/m³, vorzugsweise von 40 bis 60 kg/m³ bei Formschäumen und vorzugsweise von 14 bis 100 kg/m³ und insbesondere von 20 bis 80 kg/m³ bei Blockschäumen, auf. Die Stauchhärten liegen dann im Bereich von 1 bis 20 kPa, vorzugsweise bei 1,5 bis 12 kPa.

Die erfindungsgemäßen Polyoldispersionen besitzen ein gutes Fliessverhalten unter starker Scherbelastung und sind daher insbesondere für die Herstellung von Polyurethanschäumen geeignet. Dadurch erhöht sich die Filtrationsgeschwindigkeit beim Reinigen der Polyoldispersion nach der Produktion oder es wird für gleiche Durchsätze weniger Filterfläche benötigt.

Weiterhin zeigen sie eine hohe Lagerstabilität und sehr gute Verarbeitungseigenschaften bei der Weiterverarbeitung zu Polyurethanendprodukten. In Schaumformen mit komplizierten Geometrien (Automobilteppichrückenhinterschäumung, Automobilsitzformen usw. ) fließt das Reaktionsgemisch gut, was zur Verringerung der Lunkerbildung führt.

Aufgrund des verbesserten Zellöffnungsverhaltens beim Einsatz der erfindungsgemäßen Polyoldispersionen kann zum Beispiel in Kaltschaumrezepturen der Einsatz von Zellöffnungspolyolen und anderer Prozesshilfsmittel eingeschränkt werden, was die Rezeptur verbilligt, eine mögliche Quelle für Dosierfehler ausschaltet und die Schaumeigenschaften verbessert. Hervorzuheben sind beispielsweise verbesserte Reißdehnungen und Weiterreißfestigkeiten bei Formschäumen bzw. bessere Werte für Zugfestigkeit, Dehnung und Druckverformungsrest bei konventionellen Blockschaumstoffen mit erhöhter Tragfähigkeit.

Die vorliegende Erfindung soll anhand der folgenden nicht einschränkenden Beispiele näher erläutert werden.

### BEISPIELE

### Beispiel 1: Synthese des Polyester-Blocks (Diethylenglykol-Terephtalsäure-Oligoester):

925,3 g Dimethylterephtalat und 546,2 g Diethylenglykol wurden in einem Mehrhalskolben auf 180 °C erhitzt. Das bei der Kondensationsreaktion entstehende Methanol wurde über eine Destillationsbrücke abdestilliert. Nachdem die Methanolbildung sich verlangsamte, wurden 4 ppm Titantetrabuylat in Form einer 0,1 %-Lösung in Toluol zugesetzt und die Temperatur auf 220 °C erhöht. Unter diesen Bedingungen wurde die Reaktion zu Ende geführt, die gesamte Reaktionszeit betrug 40 Stunden. Nach dem Abkühlen wurde ein gelbbraunes zähflüssiges Produkt erhalten, das nach dem Abkühlen wachsartig erstarrte.

Säurezahl: 1,1 mg KOH/g, Hydroxylzahl: 42 mg KOH/g.

### Beispiel 2: Synthese der Blockcopolymere

In einem Druckautoklaven wurden 100 g des Esters aus Beispiel 1 mit 150 mg DMC-Katalysator versetzt und auf die Reaktionstemperatur von 120 °C aufgeheizt. Bei dieser Temperatur wurden 200 g Propylenoxid langsam so zugetropft, dass der Innendruck nicht über 6 bar anstieg. Nach etwa einer Stunde war die Reaktion beendet und es wurden 290 g eines zähflüssigen leicht gelben Produkts erhalten. Das Produkt hat laut GPC-Untersuchung ein mittleres Molekulargewicht von etwa 5000 g/mol und eine breite Molekulargewichtsverteilung.

Für die GPC wurde die Probe als Lösung in THF (50mg in 6ml) mit einem Gerät HP1090 und einem Säulensatz von Polymer Laboratories Typ "5µm Mixed C" 300*7,5mm gemessen. Die Kalibrierung erfolgte mit Polystyrolstandards von Polymer Laboratories.

### Beispiel 3: Herstellung der Polyoldispersion

200 g Lupranol 2081 wurden in einem Rundhalskolben mit Rührwerk vorgelegt und unter Stickstoffatmosphäre auf 170 °C erhitzt. Bei dieser Temperatur wurden 10 g gepulvertes Blockcopolymer aus Beispiel 2 und 150 g Polyethylenterephthalat (PET)-Schnitzel aus dem Getränkeflaschenrecycling unter starkem Rühren langsam zugesetzt. Dabei wurde die Temperatur kurzzeitig auf 250°C erhöht, um die PET-Schnitzel in Schmelze zu bringen. Nachdem die Dispersion gebildet war, wurde mittels Wasserbad schnell abgekühlt, um die thermische Belastung möglichst gering zu halten. Nach dem völligen Abkühlen wurde eine stabile Dispersion mit einer Hydroxyzahl von 26 mg KOH/g erhalten.

## Patentansprüche

1. Polyoldispersion, mindestens enthaltend
(i) mindestens ein Polyol ausgewählt aus der Gruppe bestehend aus Polyetherolen und Polyesterolen,
(ii) mindestens ein Polymerpartikelgemisch umfassend mindestens ein thermoplastisches Polymer (P) ausgewählt aus Polyvinylchlorid, Polyester, Polyamiden und Copolymeren der genannten Polymere und mindestens ein Blockcopolymer (B) ausgewählt aus der Gruppe bestehend aus Polyester-Polyether-Blockcopolymeren, Polyamid-Polyether-Blockcopolymeren, Polystyrol-Polyether-Blockcopolymeren oder Polyethylen-Polyether-Blockcopolymeren,
wobei das Blockcopolymer (B) mindestens einen zu dem thermoplastischen Polymer (P) kompatiblen Block und mindestens einen zu dem Polyol kompatiblen Block aufweist, wobei das mindestens eine Blockcopolymer (B) in einer Menge von 0,1 bis 10 Gew.-%, bezogen auf das Gesamtgewicht des eingesetzten thermoplastischen Polymers (P), in dem Polymerpartikelgemisch enthalten ist, und wobei alle Polymerpartikel des jeweiligen Polymerpartikelgemisches dasselbe thermoplastische Polymer (P) und dasselbe Blockcopolymer (B) enthalten.

2. Polyoldispersion nach Anspruch 1, wobei die Polyoldispersion einen Feststoffgehalt von 5 bis 65 Gew.% aufweist.

3. Polyoldispersion nach einem der Ansprüche 1 bis 2, wobei das in der Polyoldispersion enthaltene Polymerpartikelgemisch einen mittleren Teilchendurchmesser im Bereich von 0,01 bis 5,0 Micrometer aufweist.

4. Verfahren zur Herstellung einer Polyoldispersion, umfassend die Schritte
(a) Erwärmen einer Zusammensetzung (I) enthaltend mindestens ein thermoplastisches Polymer (P) ausgewählt aus Polystyrol, substituierten Polystyrolen, Polyacrylaten, Polymethacrylaten, Polyolefinen, Polyvinylchlorid, Polyacrylnitril, Polyester, Polyamiden und Copolymeren der genannten Polymere, mindestens ein Polyol ausgewählt aus der Gruppe bestehend aus Polyetherolen und Polyesterolen, und mindestens ein Blockcopolymer (B) ausgewählt aus der Gruppe bestehend aus Polyester-Polyether-Blockcopolymeren, Polyamid-Polyether-Blockcopolymeren, Polystyrol-Polyether-Blockcopolymeren oder Polyethylen-Polyether-Blockcopolymeren mit mindestens einem zu dem thermoplastischen Polymer (P) kompatiblen Block und mindestens einem zu dem Polyol kompatiblen Block unter Erhalt einer Zusammensetzung (II),
(b) Abkühlen der Zusammensetzung (II),
**dadurch gekennzeichnet, dass** das thermoplastische Polymer (P) vor der Zugabe zu dem Polyol gebildet wird und dass die Zusammensetzung (I) in Schritt (a) bis auf eine Temperatur erwärmt wird, bei der das eingesetzte thermoplastische Polymer (P) schmilzt.

5. Verfahren nach Anspruch 4, wobei das mindestens eine thermoplastische Polymer (P) ausgewählt ist aus der Gruppe bestehend aus Polystyrol, Polyethylen und Polyethylenterephthalat.

6. Verfahren nach einem der Ansprüche 4 oder 5, wobei das mindestens eine Blockcopolymer (B) in einer Menge von 0,1 bis 10 Gew.%, bezogen auf das Gesamtgewicht des eingesetzten thermoplastischen Polymers (P), eingesetzt wird.

7. Verfahren nach einem der Ansprüche 4 bis 6, wobei Schritt (a) des Verfahrens unter Rühren durchgeführt wird.

8. Verwendung einer Polyoldispersion gemäß einem der Ansprüche 1 bis 3 oder einer Polyoldispersion erhältlich nach einem Verfahren gemäß einem der Anspruche 4 bis 7 zur Herstellung von Polyurethanen.

9. Verfahren zur Herstellung von Polyurethanen, wobei mindestens eine Polyoldispersion gemäß einem der Ansprüche 1 bis 3 oder eine Polyoldispersion erhältlich nach einem Verfahren gemäß einem der Anspruche 4 bis 7 mit mindestens einem Polyisocyanat umgesetzt wird.

## Claims

1. A polyol dispersion comprising at least
(i) at least one polyol selected from the group consisting of polyetherols and polyesterols,
(ii) at least one polymer particle mixture comprising at least one thermoplastic polymer (P) selected from among polyvinyl chloride, polyester, polyamides and copolymers of said polymers and at least one block copolymer (B) selected from the group consisting of polyester-polyether block copolymers, polyamide-polyether block copolymers, polystyrene-polyether block copolymers and polyethylene-polyether block copolymers,
wherein the block copolymer (B) has at least one block which is compatible with the thermoplastic polymer (P) and at least one block which is compatible with the polyol, wherein the at least one block copolymer (B) is comprised in an amount of from 0.1 to 10% by weight, based on the total weight of the thermoplastic polymer (P) used, in the polymer particle mixture and all the polymer particles of the respective polymer particle mixture comprise the same thermoplastic polymer (P) and the same block copolymer (B).

2. The polyol dispersion as claimed in claim 1, wherein the polyol dispersion has a solids content of from 5 to 65% by weight.

3. The polyol dispersion as claimed in either of claims 1 and 2, wherein the polymer particle mixture comprised in the polyol dispersion has a mean particle diameter in the range from 0.01 to 5.0 microns.

4. A process for producing a polyol dispersion, which comprises the steps
(a) heating of a composition (I) comprising at least one thermoplastic polymer (P) selected from polystyrene, substituted polystyrenes, polyacrylates, polymethacrylates, polyolefins, polyvinyl chloride, polyacrylonitrile, polyester, polyamides and copolymers of said polymers, at least one polyol selected from the group consisting of polyetherols and polyesterols, and at least one block copolymer (B) selected from the group consisting of polyester-polyether block copolymers, polyamide-polyether block copolymers, polystyrene-polyether block copolymers and polyethylene-polyether block copolymers, having at least one block which is compatible with the thermoplastic polymer (P) and at least one block which is compatible with the polyol to give a composition (II),
(b) cooling of the composition (II),
wherein the thermoplastic polymer (P) is formed before addition to the polyol and the composition (I) is heated to a temperature at which the thermoplastic polymer (P) used melts in step (a).

5. The process as claimed in claim 4, wherein the at least one thermoplastic polymer (P) is selected from the group consisting of polystyrene, polyethylene and polyethylene terephthalate.

6. The process as claimed in either of claims 4 and 5, wherein the at least one block copolymer (B) is used in an amount of from 0.1 to 10% by weight, based on the total weight of the thermoplastic polymer (P) used.

7. The process as claimed in any of claims 4 to 6, wherein step (a) of the process is carried out with stirring.

8. The use of a polyol dispersion as claimed in any of claims 1 to 3 or a polyol dispersion obtainable by a process as claimed in any of claims 4 to 7 for producing polyurethanes.

9. A process for producing polyurethanes, wherein at least one polyol dispersion as claimed in any of claims 1 to 3 or a polyol dispersion obtainable by a process as claimed in any of claims 4 to 7 is reacted with at least one polyisocyanate.

## Revendications

1. Dispersion de polyols, contenant au moins
(i) au moins un polyol choisi dans le groupe constitué par les polyétherols et les polyesterols,
(ii) au moins un mélange de particules polymères, comprenant au moins un polymère thermoplastique (P) choisi parmi le poly(chlorure de vinyle), le polyester, les polyamides et les copolymères des polymères mentionnés et au moins un copolymère à blocs (B) choisi dans le groupe constitué par les copolymères à blocs de polyester-polyéther, les copolymères à blocs de polyamide-polyéther, les copolymères à blocs de polystyrène-polyéther ou les copolymères à blocs de polyéthylène-polyéther,
le copolymère à blocs (B) présentant au moins un bloc compatible avec le polymère thermoplastique (P) et au moins un bloc compatible avec le polyol, ledit au moins un copolymère à blocs (B) étant contenu en une quantité de 0,1 à 10% en poids, par rapport au poids total du polymère thermoplastique (P) utilisé, dans le mélange de particules polymères, et toutes les particules polymères du mélange de particules polymères contenant le même polymère thermoplastique (P) et le même copolymère à blocs (B).

2. Dispersion de polyols selon la revendication 1, le dispersion de polyols présentant une teneur en solides de 5 à 65% en poids.

3. Dispersion de polyols selon l'une quelconque des revendications 1 à 2, le mélange de particules polymères contenu dans la dispersion de polyols présentant un diamètre moyen de particules dans la plage de 0,01 à 5,0 micromètres.

4. Procédé de préparation d'une dispersion de polyols, comprenant les étapes de
(a) chauffage d'une composition (I) contenant au moins un polymère thermoplastique (P) choisi parmi le polystyrène, les polystyrènes substitués, les polyacrylates, les polyméthacrylates, les polyoléfines, le poly(chlorure de vinyle), le polyacrylonitrile, les polyesters, les polyamides et les copolymères des polymères mentionnés, au moins un polyol choisi dans le groupe constitué par les polyétherols et les polyesterols, et au moins un copolymère à blocs (B) choisi dans le groupe constitué par les copolymères à blocs de polyester-polyéther, les copolymères à blocs de polyamide-polyéther, les copolymères à blocs de polystyrène-polyéther ou les copolymères à blocs de polyéthylène-polyéther présentant au moins un bloc compatible avec le polymère thermoplastique (P) et au moins un bloc compatible avec le polyol, avec obtention d'une composition (II),
(b) refroidissement de la composition (II), **caractérisé en ce que** le polymère thermoplastique (P) est formé avant l'addition au polyol et **en ce que** la composition (I) dans l'étape (a) est chauffée à une température à laquelle le polymère thermoplastique (P) utilisé fond.

5. Procédé selon la revendication 4, ledit au moins un polymère thermoplastique (P) étant choisi dans le groupe constitué par le polystyrène, le polyéthylène et le poly(téréphtalate d'éthylène).

6. Procédé selon l'une quelconque des revendications 4 ou 5, ledit au moins un copolymère à blocs (B) étant utilisé en une quantité de 0,1 à 10% en poids, par rapport au poids total du polymère thermoplastique (P) utilisé.

7. Procédé selon l'une quelconque des revendications 4 à 6, l'étape (a) du procédé étant réalisée sous agitation.

8. Utilisation d'une dispersion de polyols selon l'une quelconque des revendications 1 à 3 ou d'une dispersion de polyols pouvant être obtenue selon un procédé selon l'une quelconque des revendications 4 à 7 pour la préparation de polyuréthanes.

9. Procédé pour la préparation de polyuréthanes, au moins une dispersion de polyols selon au moins l'une quelconque des revendications 1 à 3 ou une dispersion de polyols pouvant être obtenue selon un procédé selon l'une quelconque des revendications 4 à 7 étant transformée avec au moins polyisocyanate.
